# EUROPEAN PATENT SPECIFICATION

(11) **EP 2 893 116 B1**
(45) Date of publication and mention of the grant of the patent: **19.07.2017**
(21) Application number: 13834975.8
(22) Date of filing: 05.09.2013
(51) Int. Cl.: E06C 1/10, E06C 1/32, E06C 7/50, F16B 7/04

(54) **IMPROVED RELEASABLE COUPLING FOR LADDER SECTION AND THE LIKE**
VERBESSERTE LÖSBARE KUPPLUNG FÜR EINEN LEITERABSCHNITT UND DERGLEICHEN
AMÉLIORATION D'ACCOUPLEMENT LIBÉRABLE POUR SECTION D'ÉCHELLE ET AUTRE

(30) Priority: 05.09.2012 AU 2012903864
(43) Date of publication of application: 15.07.2015
(73) Proprietor: Branach Technology Pty Ltd, Boronia Victoria 3155 (AU)
(72) Inventor: WALSH, Michael, Boronia Victoria 3155 (AU)
(74) Representative: Regimbeau
(86) International application number: PCT/AU2013/001012
(87) International publication number: WO 2014/036607

(56) References cited:
- WO-A1-98/31906
- DE-A1- 2 024 508
- DE-U1-202010 014 024
- DE-U1-202010 014 024
- US-A- 5 722 806
- US-A- 5 722 806

## Description

### Introduction to Invention

This invention relates to the joining together of structures of the type including ladders, walkways, scaffolding, cantilevered platforms etc, where a joining system for such load bearing tools and construction elements must provide a high level of security, safety and rigidity, coupled with an intuitive system of engagement and release.

### Background to Invention

The provision of versatility in ladders, walkways, light scaffolding and the like sees a continuous endeavour to provide lightweight, highly durable and safe componentry with ever increasing demands for the size and performance of such systems.

One avenue of providing versatility in such systems is to provide component parts that can be joined together on site thereby allowing a number of smaller component parts be built up into an assembled high performance apparatus.

To date, such joining systems suffer a number of drawbacks including lack of appropriate strength commensurate with the component parts, difficulty in assembling or disassembling, inability to provide snug, rigid snap-fitting type components to include sufficient strength, durability and confidence in use, plus the ability of current systems to allow ready disassembly for packaging and transport. US 5,722,806 discloses a coupling according to the preamble of claim 1. An object of the invention is to provide an improved coupling system for ladders and the like.

### Statement of Invention

The invention provides a coupling for joining together two sections of a ladder or the like, said coupling comprising a female socket and a male spigot adapted for fitting to said respective sections to be joined with the co-operation with said socket and said spigot effecting said joint wherein said socket includes a socket housing having an internal dock for receiving said spigot, said dock including at least one tapered side, said tapered side including a negative step forming a keeper and wherein said spigot includes a spigot body having a tapered reference portion adapted to snugly engage said tapered dock and a section engaging portion protruding therefrom and one or a plurality of jaws pivotally connected at a pivot to said spigot body said jaw or jaws including a protruding lug adapted to co-operate with said keeper and a biasing means adapted to expand or open said jaws against said tapered dock.

The protruding lug preferably includes an angled face configured to bear upon the negative step to bias said tapered reference portion of said spigot into snug contiguous engagement with said internal dock of the female socket.

The dock preferably includes two symmetric tapered dock sides with each dock side including a negative step.

The tapered reference portion of the spigot body preferably includes symmetric tapered spigot sides. The spigot preferably includes a jaw operator having a jaw closing taper toward a first end, a jaw opening taper toward a second end and a jaw locking face wherein said jaw operator is adapted for movement between a first position with said jaw closing taper acting on said jaws to close same and withdraw said jaws into said spigot body and a second position with said jaw opening taper acting on said jaws to open or expand same so as to project said lug outside said spigot body and said jaw locking face acting on said jaws to lock same in said open or expanded position.

The jaw operator preferably includes a biasing means biasing the said jaw operator to said second position.

The jaws preferably include a leading taper adapted to co-operate with the jaw opening taper of said jaw operator.

The male spigot section engaging portion preferably includes an indexed collar.

The indexed collar preferably includes a plurality of peripheral index steps.

The index steps preferably include apertures.

The coupling most preferably includes an index locking plate to co-operate with said index collar.

In another embodiment the coupling of the invention most preferably includes a pair of male spigots co-operating with a single common indexed locking plate to provide an articulated joint for the ladder sections or the like.

The first male spigot preferably includes an index plate having index steps set at 45° increments and a second index plate having index steps set at 30° increments and said index locking plate having three or four teeth or pins thereby providing articulated adjustment of said coupling in 15° increments.

The jaw operator most preferably includes a visual indicator of the locking status of the jaws.

### Detailed Description of the Invention

The invention will now be described with reference to particular embodiments as shown in figures 1 to 12 and the accompanying legend.
- **Figure 1**: shows a phantom view of the coupling comprising a female socket and male spigot prior to engagement.
- **Figure 2**: shows a plan view of the engaged socket and spigot.
- **Figure 3**: shows an internal view of the coupling with the spigot having closed jaws in the first position.
- **Figure 4**: shows an internal view of the coupling with the spigot having open jaws in the second position.
- **Figures 5 & 6**: show alternative embodiment of a jaw locking mechanism.
- **Figure 7**: shows an alternative embodiment of the coupling.
- **Figures 8 & 9**: show a pressed metal fabrication of the coupling.
- **Figure 10**: shows one embodiment of an articulated coupling.
- **Figure 11**: shows an alternative embodiment of the articulated coupling.
- **Figure 12**: shows the articulated coupling incorporating an axle of rotation.
- **Figure 13**: shows various articulated configurations of a ladder using the coupling of the invention.

### Legend

- 1.: Coupling
- 2.: Female socket
- 3.: Male spigot
- 4.: Housing
- 5.: Tapered dock
- 6.: Intermediate step
- 7.: Spigot body
- 8.: Tapered reference portion
- 9.: Section engaging articulation portion
- 10.: Jaw
- 11.: Pivot
- 12.: Protruding lug
- 13.: Biasing means
- 14.: Angled face
- 15.: Tapered dock side
- 16.: Jaw operator
- 17.: Jaw closing taper
- 18.: Jaw opening taper
- 19.: Jaw locking face
- 20.: Leading taper
- 21.: Indexed collar
- 22.: Index steps
- 23.: Index apertures
- 24.: Index locking plate
- 25.: Visual indicator
- 26.: Teeth/pins

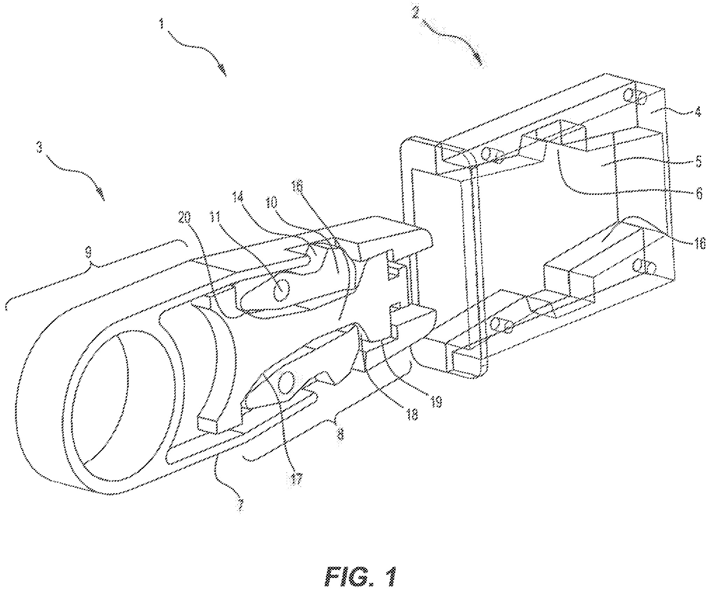

Referring firstly to Figures 1 to 4, the coupling 1 is made up of two key components being a female socket 2 which is formed in two parts and a male spigot 3 wherein the male spigot 3 and female socket 2 are both adapted to be fitted to respective ladder stiles either by gluing, rivoting, welding or other form of engagement to the open end of the respective stiles. Once the female socket 2 and male spigot 3 are suitably fitted to the end of the respective stiles, the socket and male spigot can thereby cooperate by corresponding engagement so as to effect a robust and reliable joint between the respective stiles which is free of all play, slop or looseness and provides a highly secure resultant join both in performance and feel.

The socket component 2 of the coupling comprises a housing 4 made up of two parts. The housing has an internal tapered dock 5 passing through the interior thereof with the tapered dock being formed as a continuous taper with the exception of an intermediate step 6 formed on the tapered side or sides thereof with the step 6 being adapted to form a keeper on each side of the tapered dock.

The corresponding spigot is made up of multiple parts including a spigot body 7 being made up of a tapered referencing portion 8 which is precisely configured and tapered to snugly engage the tapered dock 5 of the corresponding socket 2. The spigot body further comprises a section engaging portion 9 which is adapted to protrude from the socket once engagement of the spigot and socket is effected.

The spigot further includes two opposing jaws 10 pivotally connected at 11 to the body of the spigot within the referencing portion 8. Each of the jaws includes protruding lug 12 which is specifically configured to cooperate with the keeper 6. The two opposing jaws 10 are urged in an outward or open direction to actively engage said keeper by way of biasing means 13.

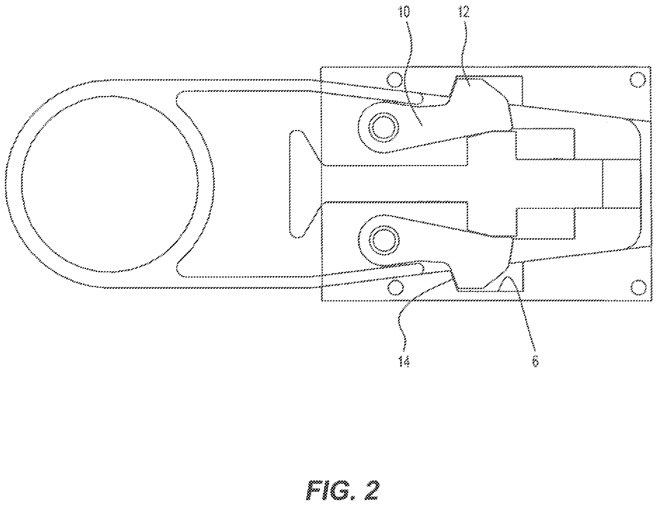

In order to ensure the snug and positive engagement of the spigot 1 to the socket 2 each of the lugs 12 of the respective jaws 10 include a rear facing angled face 14. The rear facing angled face 14 is particularly configured as shown in figure 2 to co-operate with the negative aspect of the step 6 being the inward tapering of the step sides such that the opening or splaying of the jaws causes the angled face to bear upon the negative aspect or tapered sides, in particular the tapered side of the step nearest to the opening of the socket, so as to draw the spigot into tight and snug engagement by ensuring the contiguous contact of the tapered reference portion of the spigot 8 with the tapered sides 15 of the tapered dock 5. The precise movement and engagement of the jaws to the tapered dock is assisted by pivoted attachment of the jaws to the spigot body.

As detailed in figures 1 and 2 the dock preferably includes two symmetric tapered dock sides 15 which ensure the smooth and continuously aligned engagement of both the spigot and socket component of the coupling.

In order to effect the positive action of the jaws 10 the spigot preferably includes a jaw operator mechanism 16. The jaw operator is adapted to move longitudinally with the confines of the spigot body and includes a jaw closing taper 17 formed towards a first end of the jaw operator and a jaw opening taper 18 formed towards a second end with the jaw opening taper terminating in twin jaw locking faces 19. In this manner, the jaw operator can move from a first position with the jaw operator pushed towards the end of the spigot adapted for insertion into the socket whereby the jaw closing tapers act on leading tapers 20 formed in the jaws so as to pivot the jaws around the pivot 11 withdrawing or closing the jaws within the confines of the spigot body as shown in figure 1 thereby allowing ready and smooth insertion of the spigot into the socket. Once the spigot is fully inserted into the socket the jaw operator will return to the second position thereby ensure the jaws open by response to the jaw opening taper acting on the jaws 10 with the further movement of the jaw operator engaging the jaw locking faces to the jaws thereby locking the jaws in the splayed or open position so as to ensure lock engagement of the spigot to the socket.

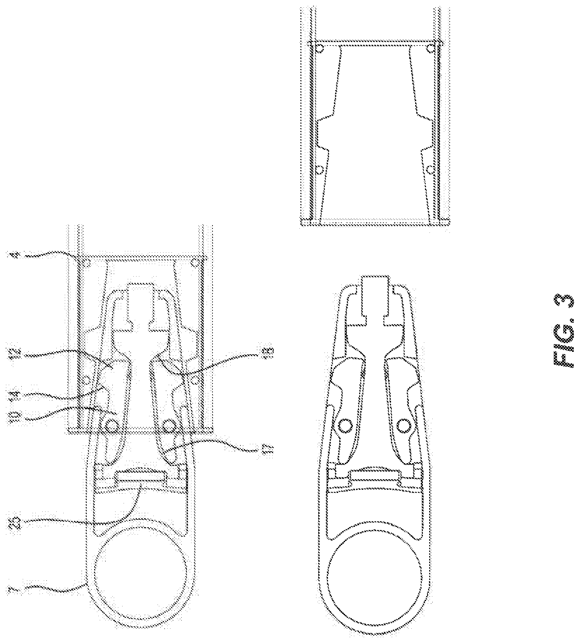

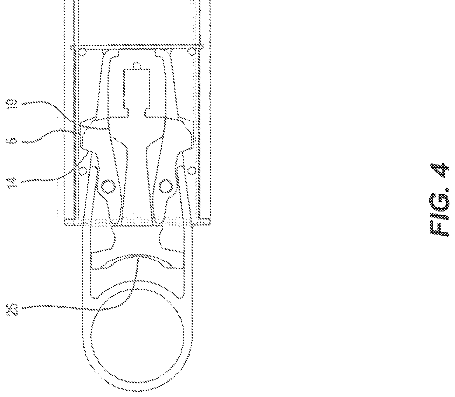

The first position of the jaw operator is clearly shown in figure 3 with the jaws being withdrawn so as to ensure ready and complete insertion of the spigot into the socket. Figure 4 shows the jaw operator in the second position being drawn back toward the rear of the spigot so as to cause the jaws to splay out into the open position thereby ensuring engagement with the socket. The biasing means is most preferably incorporated into the action of the jaw operator with the biasing means biasing the jaw operator for the second position thereby ensuring the bias is always toward the locked position for the jaws.

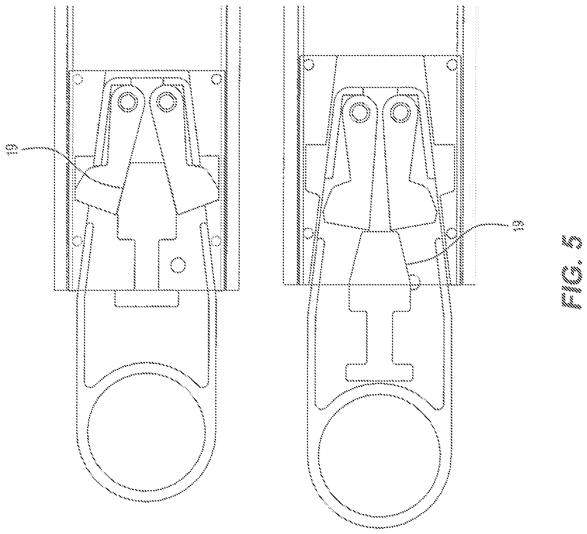

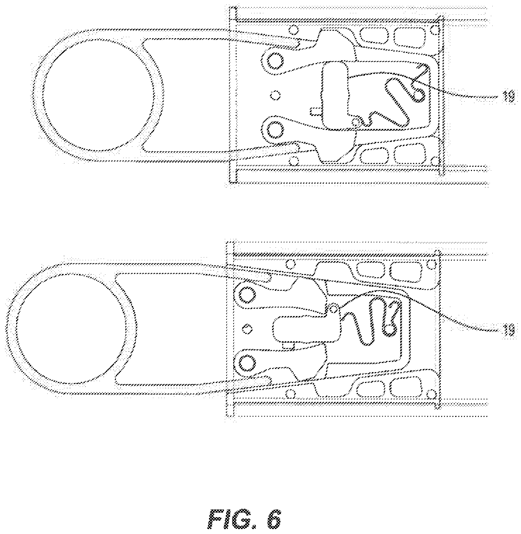

Referring now to figures 5 and 6 an alternative embodiment of the invention is shown with an alternative jaw operator and a jaw locking system.

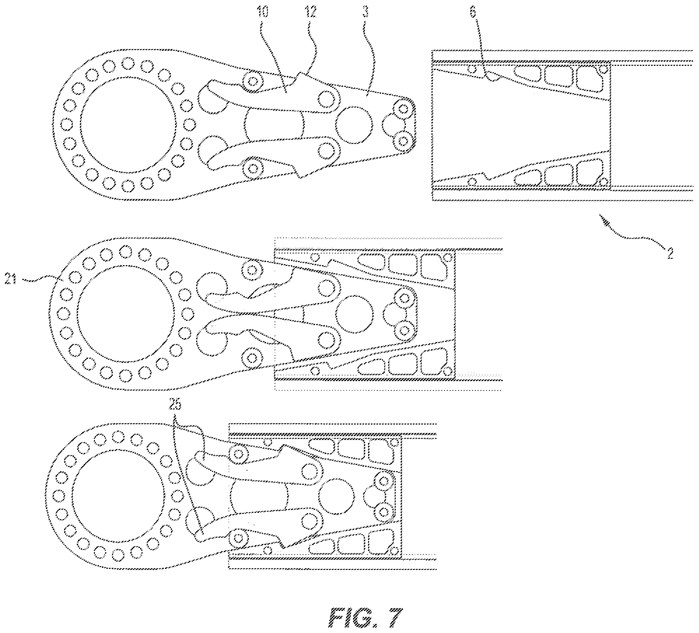

Referring now to figure 7 an alternative embodiment of the coupling is shown which functions without the use of a dedicated jaw operator and incorporates integral biasing of the jaws 10 toward the splayed or open position such that insertion of the spigot 3 into the socket 2 causes the lugs 12 of the jaws 10 to bear down upon the intermediate step 6 and return to the locked position once full engagement has occurred. The protruding ends of the jaws function as a visual indicator 25 to demonstrate that the spigot is fully engaged and locked into the socket.

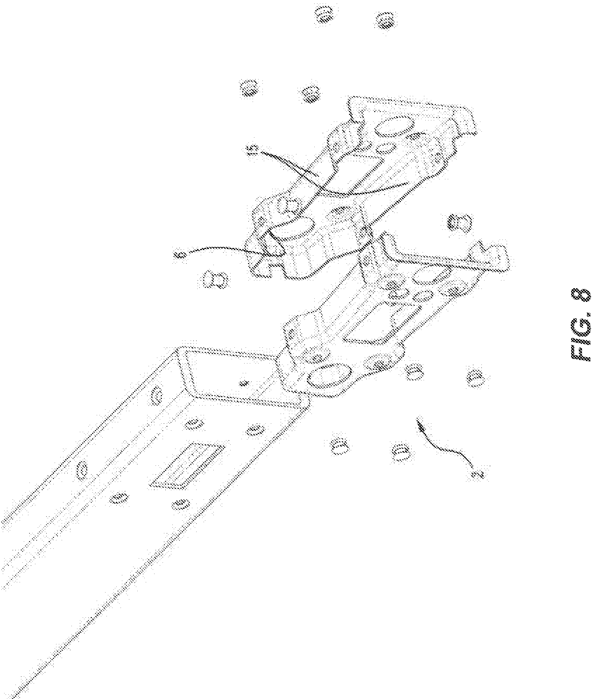

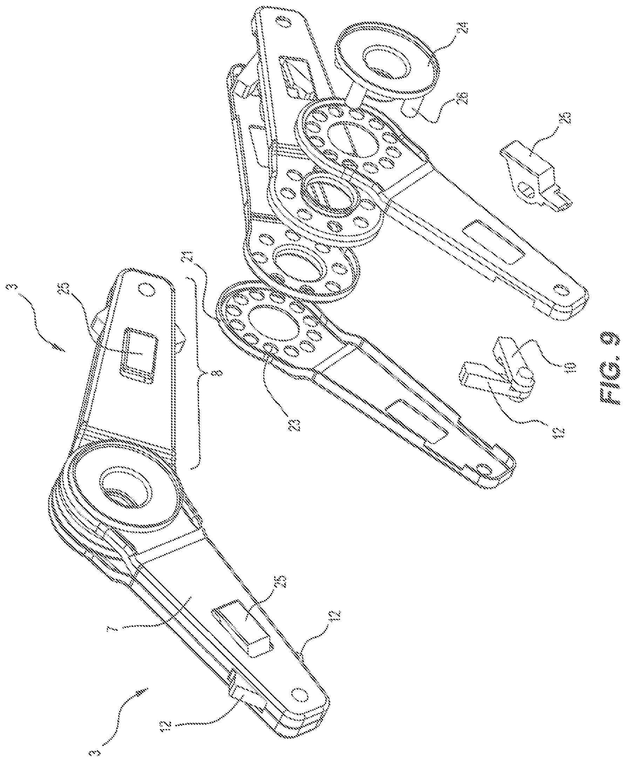

Figures 8 and 9 detail one embodiment of the invention where the coupling is fabricated from pressed metal components. The pressed metal components are preferably formed in two parts of identical configuration allowing the socket as shown in figure 8 and the spigot as shown in figure 9 to be fabricated from a minimal number of components.

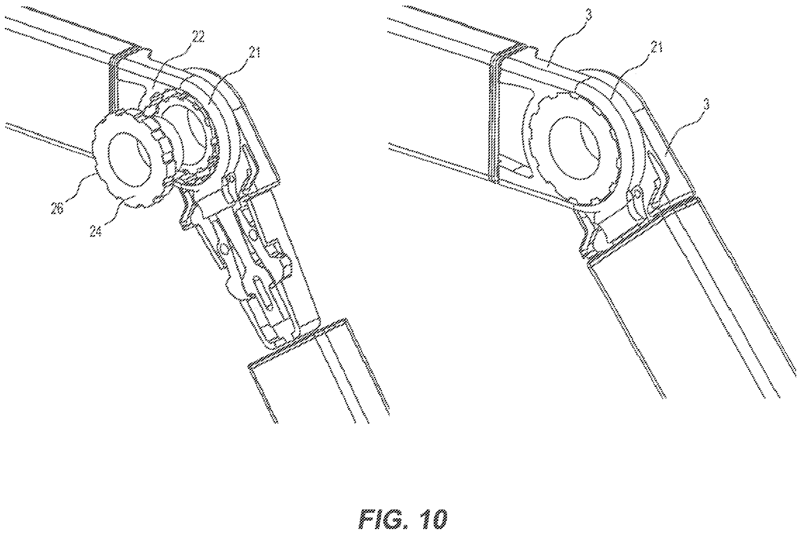

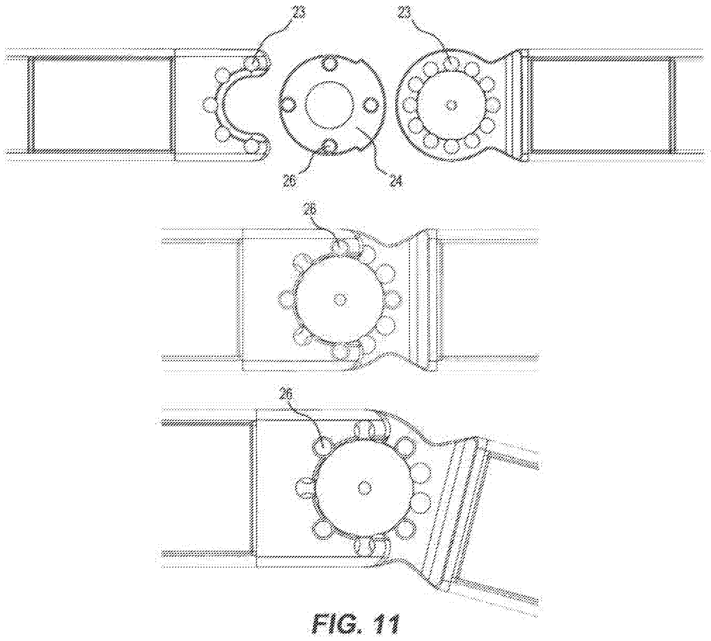

The coupling of the invention can be used to join straight components or at its most flexible can incorporate an indexed collar 21 as part of the section engaging portion of the male spigot as shown in figures 9 to 12. In this manner, the indexed collar can incorporate a plurality of index steps or index apertures 23 formed around the periphery of the collar such that providing indexed collars on respective spigots allows two spigots to be joined together to form an articulated joint where the degree of rotation of the respective spigots can be locked into place with the use of an index locking plate 24. Referring to figure 11 a particularly preferred embodiment the invention is shown where the nature and flexibility of the articulated configuration of the joint can be maximised by providing a first male spigot having an open index collar with index steps set at 45° increments and a second closed index collar having index steps set at 30° increments such that the use of an index locking plate having three or four teeth or pins 26 set at 90 degrees allows the articulated form of the coupling to be adjustable over 15° increments.

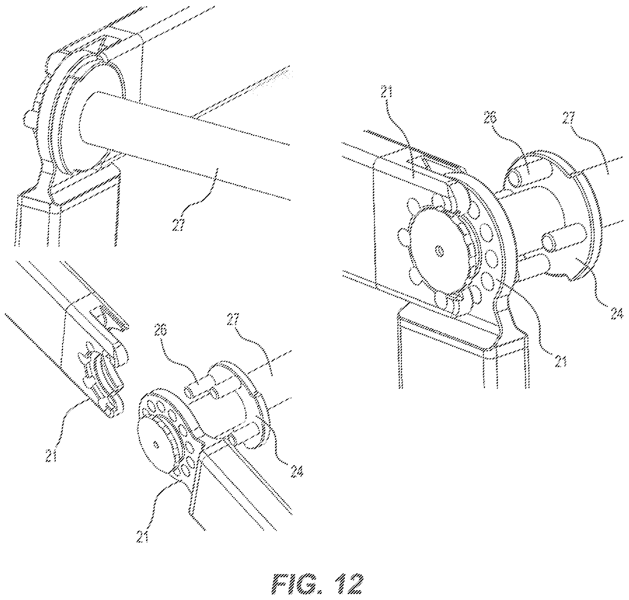

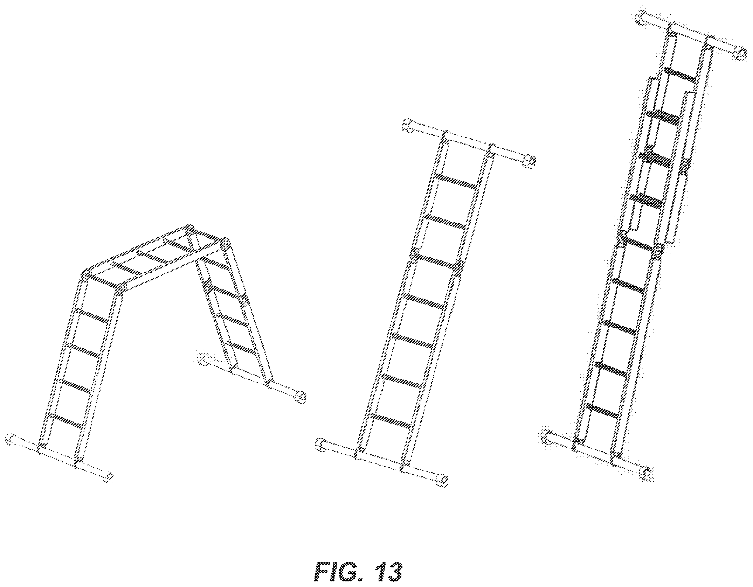

Referring now to figure 12 the articulated configuration of the coupling can be further enhanced with the use of an axle 27 integrated with the index locking plate. The use of an axle in this manner of a wide range of configurations as shown in figure 13.

The coupling of the invention allows for the first time the ability to join together a large number of component parts to construct a ladder or other load bearing assembly with a secure, rigid and highly intuitive joining coupling. The coupling can incorporate a visual indicator 25 clearly showing the locked and secure nature of any assembly and the readiness for use as detailed in one embodiment given in figure 9.

In use, the coupling of the invention would have the socket component fitted to the end of a range of ladder sections of various length and a supply of spigots having a range of section engaging portions 9. The section engaging portions could include straight joiners having two tapered reference portions joined end to end and intended to join two ladder sections together as a single straight ladder; fixed angle joiners set at a given angle; articulated couplings made up of two spigots each having an index plate and a common index collar with the option of including an axle integrated with the locking plate. With this range of components and a selection of straight ladder sections and wide range of ladder assemblies could be constructed without the use of special tools or particular expertise whilst ensuring the construction of a rigid and highly stable assembly.

## Claims

1. A coupling (1) for joining together two sections of a ladder or the like, said coupling comprising a female socket (2) and a male spigot (3) adapted for fitting to said respective sections to be joined with the co-operation of said socket and said spigot effecting said joint, wherein said socket includes a socket housing (4) adapted for integration with the stile of said ladder and having an internal dock (5) for receiving said spigot, said dock including at least one tapered side, said tapered side including a negative step (6) forming a keeper and wherein said spigot includes a spigot body (7) having a tapered reference portion (8) adapted to snugly engage said tapered dock and a section engaging portion (9) protruding therefrom and one or a plurality of jaws (10), **characterized by** said one or plurality of jaws being pivotally connected at a pivot (11) to the body of said spigot, said jaw or jaws including a protruding lug (12) adapted to co-operate with said keeper and a biasing means (13) adapted to expand open said jaws against said tapered dock to actively engage said protruding lug with said keeper.

2. A coupling according to claim 1, wherein said protruding lug includes an angled face (14) configured to bear upon said negative step to bias said tapered reference portion of said spigot into snug continuous engagement with said internal dock (6) of said female socket.

3. A coupling according to claim 1 or 2, wherein said dock includes two symmetric tapered dock sides (15) with each dock side including a negative step.

4. A coupling according to claim 3 wherein said tapered reference portion of said spigot body includes symmetric tapered spigot sides (16).

5. A coupling according to any one of claims 1 to 4, wherein said spigot includes a jaw operator having a jaw closing taper (17) toward a first end, a jaw opening taper (18) toward a second end and a jaw locking face said jaw operator being adapted for movement between a first position with said jaw closing taper acting on said jaws to close same and withdraw said jaws into said spigot body and a second position with said jaw opening taper acting on said jaws to open or expand same so as to project said lug outside said spigot body and said jaw locking face acting on said jaws to lack same on said open or expanded position.

6. A coupling according to claim 5, wherein said jaw operator includes said biasing means biasing said jaw operator to said second position.

7. A coupling accordingly to claim 5 or 6, wherein said jaws include a leading taper adapted to co-operate with said jaw opening taper of said jaw operator.

8. A coupling according to any one of claims 1 to 7, wherein said male spigot includes an indexed collar.

9. A coupling accordingly to claim 8, wherein said indexed collar includes a plurality of peripheral index steps.

10. A coupling according to claim 9, wherein said index steps include apertures (23).

11. A coupling according to claims 8 to 10 including an index locking plate (24).

12. A coupling according to claim 11 comprising a pair of male spigots co-operating with a single common index locking plate to provide an articulated joint for said ladder sections.

13. A coupling according to claim 12, wherein a first male spigot includes a first index collar having index steps set at 45° increments and a second male spigot includes a second index collar having index steps set at 30° increments and said index locking plate having 3 or 4 teeth or pins thereby providing articulated adjustments of said coupling in 15° increments.

14. A coupling according to any one of claims 5 to 13, wherein said jaw operator includes a visual indicator (25) of the locked status of said jaws.

## Patentansprüche

1. Kupplung (1), um zwei Abschnitte einer Leiter oder dergleichen miteinander zu verbinden, wobei die Kupplung eine aufnehmende Buchse (2) und einen aufgenommenen Zapfen (3) umfasst, die angepasst sind, um in die entsprechenden Abschnitte zu passen, um mit dem Zusammenwirken der Buchse und des Zapfens verbunden zu werden, die die Verbindung durchführen, wobei die Buchse ein Buchsengehäuse (4) umfasst, das zur Integration mit dem Holm der Leiter angepasst ist und ein inneres Dock (5) zum Aufnehmen des Zapfens umfasst, wobei das Dock mindestens eine abgeschrägte Seite aufweist, wobei die abgeschrägte Seite eine negative Stufe (6) umfasst, die einen Halter bildet, und wobei der Zapfen einen Zapfenkörper (7), der einen abgeschrägten Bezugsabschnitt (8), der angepasst ist, um genau passend in das abgeschrägte Dock einzugreifen, und einen in den Abschnitt eingreifenden Teil (9) aufweist, der davon hervorsteht, und eine oder mehrere Backen (10) umfasst, **dadurch gekennzeichnet, dass** die eine oder mehreren Backen drehbar mit einem Drehzapfen (11) mit dem Körper des Zapfens verbunden ist/sind, wobei die Backe oder Backen einen hervorstehenden Ansatz (12), der angepasst ist, um mit dem Halter zusammenzuwirken, und ein Vorspannungsmittel (13) umfassen, das angepasst ist, um die Backen offen gegen das abgeschrägte Dock auszuweiten, um den hervorstehenden Ansatz aktiv mit dem Halter in Eingriff zu bringen.

2. Kupplung nach Anspruch 1, wobei der hervorstehende Ansatz eine abgewinkelte Fläche (14) umfasst, die ausgestaltet ist, um auf der negativen Stufe aufzuliegen, um den abgeschrägten Bezugsabschnitt des Zapfens in genau passenden ununterbrochenen Eingriff mit dem inneren Dock (6) der aufnehmenden Buchse vorzuspannen.

3. Kupplung nach Anspruch 1 oder 2, wobei das Dock zwei symmetrische abgeschrägte Dockseiten (15) aufweist, wobei jede Dockseite eine negative Stufe umfasst.

4. Kupplung nach Anspruch 3, wobei der abgeschrägte Bezugsabschnitt des Zapfenkörpers symmetrische abgeschrägte Zapfenseiten (16) umfasst.

5. Kupplung nach einem der Ansprüche 1 bis 4, wobei der Zapfen ein Zapfenbetätigungsorgan umfasst, das eine Backenschließabschrägung (17) in Richtung eines ersten Endes, eine Backenöffnungsabschrägung (18) in Richtung eines zweiten Endes und eine Backensperrfläche aufweist, wobei das Backenbetätigungsorgan zur Bewegung zwischen einer ersten Position, in der die Backenschließabschrägung auf die Backen einwirkt, um diese zu schließen und die Backen in den Zapfenkörper zurückzuziehen, und einer zweiten Position angepasst ist, in der die Backenöffnungsabschrägung auf die Backen einwirkt, um diese zu öffnen oder auszuweiten, um den Ansatz aus dem Zapfenkörper vorspringen zu lassen, und die Backensperrfläche auf die Backen einwirkt, um diese in der offenen oder ausgeweiteten Position zu sperren.

6. Kupplung nach Anspruch 5, wobei das Backenbetätigungsorgan das Vorspannungsmittel umfasst, das das Backenbetätigungsorgan in die zweite Position vorspannt.

7. Kupplung nach Anspruch 5 oder 6, wobei die Backen eine Vorderabschrägung umfassen, die angepasst ist, um mit der Backenöffnungsabschrägung des Backenbetätigungsorgans zusammenzuwirken.

8. Kupplung nach einem der Ansprüche 1 bis 7, wobei der aufgenommene Zapfen einen Rastkragen umfasst.

9. Kupplung nach Anspruch 8, wobei der Rastkragen mehrere umlaufende Raststufen umfasst.

10. Kupplung nach Anspruch 9, wobei die Raststufen Öffnungen (23) umfassen.

11. Kupplung nach Anspruch 8 bis 10, die eine Rastverriegelungsplatte (24) umfasst.

12. Kupplung nach Anspruch 11, die ein Paar aufgenommene Zapfen umfasst, die mit einer einzelnen gemeinsamen Rastverriegelungsplatte zusammenwirken, um eine gelenkige Verbindung für die Leiterabschnitte bereitzustellen.

13. Kupplung nach Anspruch 12, wobei ein erster aufgenommener Zapfen einen ersten Rastkragen umfasst, der Raststufen aufweist, die in Abstufungen von 45° eingestellt sind, und ein zweiter aufgenommener Zapfen einen zweiten Rastkragen umfasst, der Raststufen aufweist, die in Abstufungen von 30° eingestellt sind, und die Rastverriegelungsplatte 3 oder 4 Zähne oder Stifte aufweist, wodurch gelenkige Anpassungen der Kupplung in Abstufungen von 15° bereitgestellt werden.

14. Kupplung nach einem der Ansprüche 5 bis 13, wobei das Backenbetätigungsorgan eine optische Anzeige (25) des verriegelten Zustands der Backen umfasst.

## Revendications

1. Couplage (1) pour assembler deux sections d'une échelle ou similaire, ledit couplage comprenant une prise femelle (2) et un embout mâle (3) adaptés pour s'installer dans lesdites sections respectives à assembler avec la coopération de ladite prise et dudit embout qui effectuent ledit assemblage, dans lequel ladite prise comprend un boîtier de prise (4) adapté pour s'intégrer avec le montant de ladite échelle et ayant une baie interne (5) pour recevoir ledit embout, ladite baie comprenant au moins un côté progressivement rétréci, ledit côté progressivement rétréci comprenant un échelon négatif (6) formant un arrêtoir et dans lequel ledit embout comprend un corps d'embout (7) ayant une partie de référence progressivement rétrécie (8) adaptée pour mettre parfaitement en prise ladite baie progressivement rétrécie et une partie de mise en prise de section (9) faisant saillie de cette dernière, et une mâchoire ou une pluralité de mâchoires (10), **caractérisé par** ladite une mâchoire ou une pluralité de mâchoires étant raccordée de manière pivotante au niveau d'un pivot (11) au corps dudit embout, ladite mâchoire ou lesdites mâchoires comprenant une patte en saillie (12) adaptée afin de coopérer avec ledit arrêtoir et un moyen de sollicitation (13) adapté pour ouvrir lesdites mâchoires contre ladite baie progressivement rétrécie afin de mettre activement en prise ladite patte en saillie avec ledit arrêtoir.

2. Couplage selon la revendication 1, dans lequel ladite patte en saillie comprend une face coudée (14) configurée pour supporter ledit échelon négatif afin de solliciter ladite partie de référence progressivement rétrécie dudit embout en mise en prise parfaitement continue avec ladite baie interne (16) de ladite prise femelle.

3. Couplage selon la revendication 1 ou 2, dans lequel ladite baie comprend deux côtés de baie progressivement rétrécis symétriques (15), avec chaque côté de baie comprenant un échelon négatif.

4. Couplage selon la revendication 3, dans lequel ladite partie de référence progressivement rétrécie dudit corps d'embout comprend des côtés d'embout progressivement rétrécis symétriques (16).

5. Couplage selon l'une quelconque des revendications 1 à 4, dans lequel ledit embout comprend un actionneur de mâchoire ayant une conicité de fermeture de mâchoire (17) vers une première extrémité, une conicité d'ouverture de mâchoire (18) vers une seconde extrémité et une face de verrouillage de mâchoire, ledit actionneur de mâchoire étant adapté pour effectuer un mouvement entre une première position avec ladite conicité de fermeture de mâchoire qui agit sur lesdites mâchoires afin de fermer ces dernières et retirer lesdites mâchoires dans ledit corps d'embout et une seconde position avec ladite conicité d'ouverture de mâchoire qui agit sur lesdites mâchoires pour ouvrir ou écarter ces dernières afin de faire faire saillie à ladite patte vers l'extérieur dudit corps d'embout et ladite face de verrouillage de mâchoire agissant sur lesdites mâchoires pour verrouiller ces dernières dans ladite position ouverte ou écartée.

6. Couplage selon la revendication 5, dans lequel ledit actionneur de mâchoire comprend ledit moyen de sollicitation sollicitant ledit actionneur de mâchoire dans la seconde position.

7. Couplage selon la revendication 5 ou 6, dans lequel lesdites mâchoires comprennent une conicité d'attaque adaptée pour coopérer avec ladite conicité d'ouverture de mâchoire dudit actionneur de mâchoire.

8. Couplage selon l'une quelconque des revendications 1 à 7, dans lequel ledit embout mâle comprend un collier indexé.

9. Couplage selon la revendication 8, dans lequel ledit collier indexé comprend une pluralité d'échelons d'indice périphériques.

10. Couplage selon la revendication 9, dans lequel lesdits échelons d'indice comprennent des ouvertures (23).

11. Couplage selon les revendications 8 à 10, comprenant une plaque de verrouillage d'indice (24).

12. Couplage selon la revendication 11, comprenant une paire d'embouts mâles coopérant avec une plaque de verrouillage d'indice commune afin de fournir un assemblage articulé pour lesdites sections d'échelle.

13. Couplage selon la revendication 12, dans lequel un premier embout mâle comprend un premier collier d'indice ayant des échelons d'indice placés à des incréments de 45° et un second embout mâle comprend un second collier d'indice ayant des échelons d'indice placés à des incréments de 30°, et ladite plaque de verrouillage d'indice ayant 3 ou 4 dents ou broches, fournissant ainsi des ajustements articulés dudit couplage dans des incréments de 15°.

14. Couplage selon l'une quelconque des revendications 5 à 13, dans lequel ledit actionneur de mâchoire comprend un indicateur visuel (25) de l'état bloqué desdites mâchoires.
